# DEMANDE DE BREVET EUROPEEN

(11) **EP 4 350 199 A1**
(43) Date de publication de la demande: **10.04.2024**
(21) Numéro de dépôt: 23201846.5
(22) Date de dépôt: 05.10.2023
(51) Int. Cl.: F17C 1/00

(54) **ENVELOPPE DE CONTENTION DE GAZ PRESSURISÉ, RÉSERVOIR DE GAZ PRESSURISÉ ET PROCÉDÉ DE FABRICATION D'UNE ENVELOPPE DE CONTENTION DE GAZ PRESSURISÉ ASSOCIÉS**

(30) Priorité: 05.10.2022 FR 2210191
(71) Demandeur: Faurecia Systèmes d'Echappement, 92000 Nanterre (FR)
(72) Inventeur: BAVEREL, Christophe, 25400 AUDINCOURT (FR); HERNANDEZ, Dorian, 90100 JONCHEREY (FR); FARALDI, David, 25200 MONTBELIARD (FR); MORET, Marc, 44240 LA CHAPELLE SUR ERDRE (FR); BRANGER, Thomas, 85600 MONTAIGU (FR)
(74) Mandataire: Lavoix

(57) **Abrégé**

Cette enveloppe de contention de gaz pressurisé (12), comprend :
- une première partie (22), comprenant une première coque (44),
- une deuxième partie, comprenant une deuxième coque,
- au moins une partie intermédiaire (26), disposée entre la première (22) et la deuxième partie, selon une direction d'assemblage (A-A'), la ou les partie(s) intermédiaire(s) (26) étant solidarisées aux première (22) et deuxième parties,

la première partie (22), la deuxième partie et l'au moins une partie intermédiaire (26) délimitant ensemble un volume intérieur,
la ou au moins l'une des partie(s) intermédiaire(s) (26) comprenant :
- une coque intermédiaire (34), et
- au moins un pilier (36) allongé selon une direction d'élongation (E-E'), connectant deux portions opposées de la coque intermédiaire (34) et traversant le volume intérieur (28) perpendiculairement à la direction d'assemblage (A-A'),

le pilier (36) et la coque intermédiaire (34) étant venus de matière.

## Description

La présente invention concerne une enveloppe de contention de gaz pressurisé. L'invention concerne un réservoir de gaz pressurisé comprenant une telle enveloppe ainsi qu'un procédé de fabrication d'une telle enveloppe.

Dans le domaine des moyens de transports, et en particulier dans l'automobile, il peut s'avérer important de contenir du gaz pressurisé. Ceci s'avère d'autant plus vrai avec l'essor des véhicules munis de piles à combustible, pour lesquels du dihydrogène destiné à alimenter une pile à combustible doit être stocké dans le véhicule.

Il est connu d'utiliser des réservoirs cylindriques pour la contention de gaz pressurisé dans des véhicules. De tels réservoirs sont généralement dotés d'une enveloppe de contention cylindrique, disposée à l'intérieur d'un corps du réservoir, et visant à assurer la contention du gaz pressurisé dans le réservoir.

De telles enveloppes, et plus généralement de tels réservoirs, ne donnent toutefois pas entière satisfaction en raison de leur forme qui est parfois inadaptée à l'aménagement d'un véhicule.

Il a alors été proposé d'utiliser des réservoirs non cylindriques, et par exemple des réservoirs de forme prismatiques. De tels réservoirs présentent généralement la forme d'un prisme aplati permettant d'améliorer l'intégration du réservoir dans le véhicule.

De tels réservoirs ne donnent toutefois pas entière satisfaction. En effet, du fait de leur forme non cylindrique, la robustesse des réservoirs s'avère détériorée. Il a alors été nécessaire de renforcer localement les réservoirs pour améliorer leur robustesse, et d'adapter les enveloppes à de tels renforts. La fabrication de telles enveloppes s'avère toutefois complexe.

En outre, afin d'assurer une bonne intégration d'une enveloppe dans un véhicule, il est généralement nécessaire de concevoir et de fabriquer des pièces pour l'enveloppe étant spécifique au véhicule. Ceci peut s'avérer particulièrement onéreux.

Ainsi, l'un des buts de l'invention est de proposer une enveloppe de contention de gaz permettant une intégration facilitée dans un véhicule tout en permettant d'obtenir un réservoir robuste et peu complexe à fabriquer. Un autre but de l'invention de de proposer une telle enveloppe qui soit versatile et qui puisse être adaptée à différents types de véhicules à moindre coût.

A cet effet, l'invention a pour objet une enveloppe de contention de gaz pressurisé, comprenant :
- une première partie, comprenant une première coque,
- une deuxième partie, comprenant une deuxième coque,
- au moins une partie intermédiaire, disposée entre la première et la deuxième partie, selon une direction d'assemblage, la ou les partie(s) intermédiaire(s) étant solidarisées aux première et deuxième parties,

la première partie, la deuxième partie et l'au moins une partie intermédiaire délimitant ensemble un volume intérieur,
la ou au moins l'une des partie(s) intermédiaire(s) comprenant :
   - une coque intermédiaire, et
   - au moins un pilier allongé selon une direction d'élongation, connectant deux portions opposées de la coque intermédiaire et traversant le volume intérieur perpendiculairement à la direction d'assemblage,
le pilier et la coque intermédiaire étant venus de matière.

Une telle enveloppe, par l'utilisation d'une partie intermédiaire comprenant un pilier permet d'obtenir une enveloppe pouvant accueillir des éléments de renfort d'un réservoir. En outre, le pilier étant venu de matière à la coque intermédiaire, le simple assemblage de la partie intermédiaire aux première et aux deuxième parties permet d'obtenir une telle enveloppe apte à accueillir au moins un renfort. Enfin, et comme un nombre variable de parties intermédiaires peuvent être assemblées aux première et deuxième parties, il est particulièrement aisé d'adapter l'enveloppée aux véhicule sur lequel l'enveloppe est destinée à être utilisé, par simple modification du nombre de parties intermédiaires solidarisées entre les première et deuxième parties.

Suivant d'autres aspects avantageux de l'invention, l'enveloppe de contention comporte l'une ou plusieurs des caractéristiques suivantes, prise(s) isolément ou suivant toute combinaison techniquement possible :
- l'enveloppe comprend une pluralité de parties intermédiaires, adjacentes selon la direction d'assemblage ;
- l'au moins une partie intermédiaire comprend une pluralité de piliers, la pluralité de piliers étant alignée selon une direction perpendiculaire à la direction d'assemblage et à la direction d'élongation desdits piliers ;
- l'au moins un pilier est creux, le pilier comprenant une paroi de pilier, connectée à la coque intermédiaire et délimitant une cavité de pilier, le pilier et la coque intermédiaire délimitant deux ouvertures de sorte que la cavité de pilier débouche de part et d'autre de la partie intermédiaire ;
- l'enveloppe est telle que :
   - la première partie comprend au moins une première nervure de renfort solidaire de la première coque, ladite première nervure de renfort comprenant une lumière s'étendant parallèlement à la direction d'élongation et débouchant de part et d'autre de la première partie, et/ou
   - la deuxième partie comprend au moins une deuxième nervure de renfort solidaire de la deuxième coque, ladite deuxième nervure de renfort comprenant une lumière s'étendant parallèlement à la direction d'élongation et débouchant de part et d'autre de la deuxième partie ;
- la première partie, l'au moins une partie intermédiaire et la deuxième partie, sont en alternance selon la direction d'assemblage, formés en un matériau configuré pour être transparent à un rayonnement laser et en un matériau configuré pour absorber le rayonnement laser,
   la première partie, l'au moins une partie intermédiaire et la deuxième partie, étant solidarisées entre elles selon la direction d'assemblage par soudage laser ;
- la première partie, l'au moins une partie intermédiaire et la deuxième partie, sont solidarisées entre elles selon la direction d'assemblage par soudage bord à bord, une feuille résistive étant disposée entre des bords adjacents soudés de la première partie, de l'au moins une partie intermédiaire ou de la deuxième partie ; et
- les bords adjacents soudés délimitent entre eux un plan de soudage bord à bord oblique, s'étendant obliquement relativement à la direction d'assemblage.

L'invention concerne en outre un réservoir comprenant une enveloppe de gaz pressurisé telle que précitée, et un corps de réservoir disposé autour de l'enveloppe, une face interne du corps de réservoir étant apposée à une face externe de l'enveloppe.

L'invention concerne en outre un procédé d'assemblage d'une enveloppe de contention d'un gaz pressurisé, comprenant les étapes suivantes :
- fourniture d'une première partie, d'une deuxième partie et d'au moins une partie intermédiaire de l'enveloppe ;
- solidarisation de la ou des partie(s) intermédiaire(s) aux première et deuxième parties, la ou les partie(s) intermédiaire(s) étant disposée(s) entre la première partie et la deuxième partie selon la direction d'assemblage.

L'invention sera mieux comprise à la lecture de la description qui va suivre, donnée uniquement à titre d'exemple non limitatif et faite en se référant aux dessins sur lesquels :
[Fig 1] la figure 1 est une vue en perspective d'un réservoir comprenant une enveloppe selon l'invention, lors de la fabrication du réservoir ;
[Fig 2] la figure 2 est une vue en coupe transversale du réservoir de la figure 1 selon un plan de coupe I-I', la fabrication du réservoir étant terminée ;
[Fig 3] la figure 3 est une vue en perspective du réservoir de la figure 1 dans son entièreté ; et
[Fig 4] la figure 4 est une vue en coupe selon le plan I-I' d'un détail de la solidarisation entre deux partie d'une enveloppe selon un mode de réalisation alternatif au mode de réalisation présenté sur les figures 1 à 3.

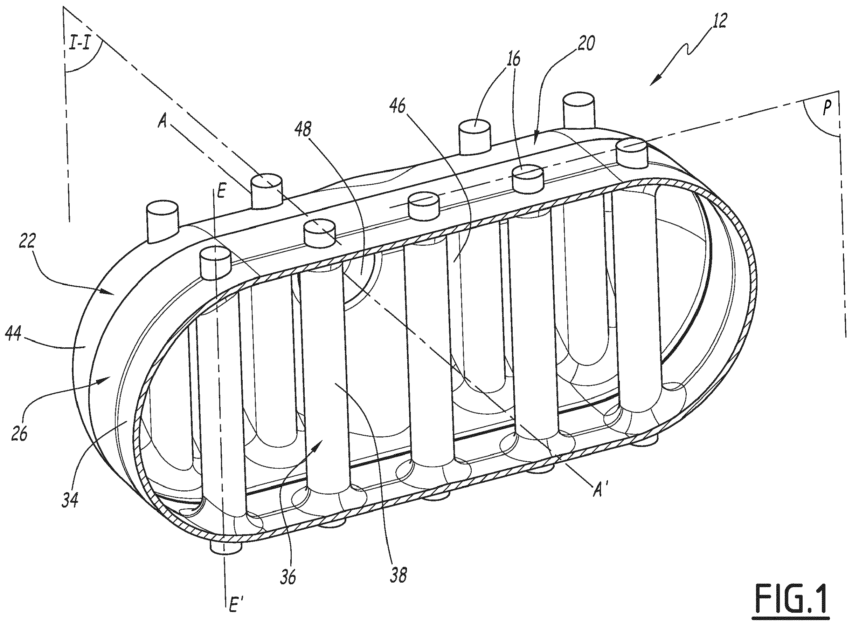

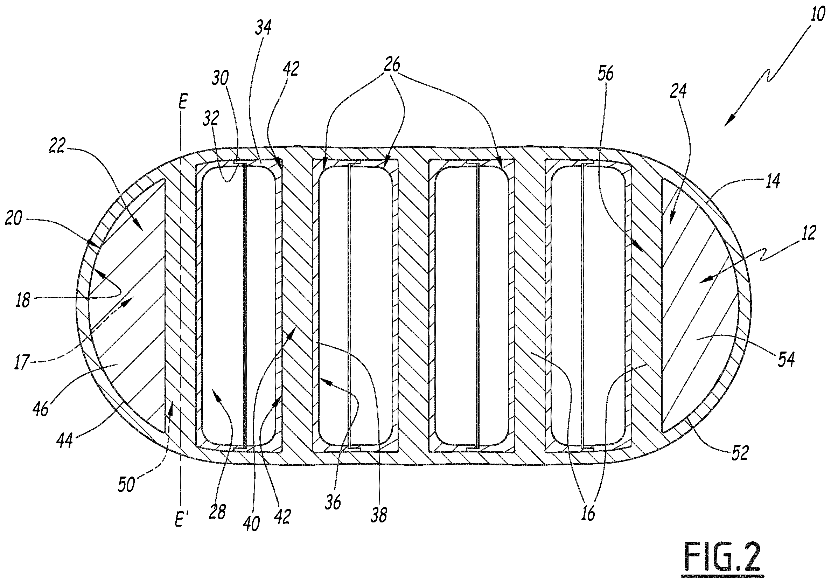

En référence aux figures 1 à 3, un réservoir de gaz pressurisé 10 comprend une enveloppe de contention de gaz pressurisé 12. Comme visible sur la figure 2, le réservoir 10 comprend en outre un corps de réservoir 14 ainsi qu'au moins une colonne de réservoir 16.

Le réservoir de gaz pressurisé 10 est configuré pour contenir un gaz pressurisé tel par exemple un gaz combustible réducteur et tel notamment de l'hydrogène pressurisé. Le réservoir de gaz pressurisé 10 est par exemple configuré pour contenir un gaz à une pression supérieure à 200 bar et par exemple un gaz à une pression de 350 bar ou un gaz à une pression de 700 bar. Le réservoir de gaz pressurisé 10 est en outre par exemple configuré pour contenir un liquide, tel par exemple une phase liquide du gaz pressurisé contenu dans le réservoir 10.

Le réservoir de gaz pressurisé 10 est par exemple destiné à être installé dans un véhicule et par exemple un véhicule automobile. Le réservoir de gaz pressurisé 10 est par exemple configuré pour alimenter en combustible une pile à combustible du véhicule (non représentée).

Le corps de réservoir 14 forme par exemple un volume de corps 17 dans laquelle est logée l'enveloppe 12. Le corps de réservoir 14 comprend par exemple une face interne 18 définissant le volume de corps 17. Le corps de réservoir 14 est par exemple réalisé autour de l'enveloppe 12 de sorte à ce que l'enveloppe 12 soit disposée dans le corps de réservoir 14, la face interne 18 étant par exemple apposée à une face externe 20 de l'enveloppe.

Le corps de réservoir 14 est par exemple réalisé en composite. Le composite à partir duquel le corps de réservoir 14 est réalisé comprend par exemple une résine telle : une résine époxy, ou une résine réalisée à partir d'au moins un polymère thermoplastique choisi dans le groupe constitué par les polyoléfines, notamment le polypropylène, les polyamides, notamment les polyamides aliphatiques, tels que le polycaprolactame PA 6, le polyhexaméthylène adipamide PA 6.6, les polycarbonates, les PAEK (Polyaryléthercétone) dont font partie le PEEK (polyétheréthercétone) et le PEKK (polyéthercétonecétone), les matières sur base acrylique type PMMA (notamment la résine connue sous le nom d'ELIUM), les PEI (Polyétherimide également connu sous le nom d'ULTEM), le PPS (Polysulfure de phénylène), l'ABS (acrylonitrile butadiène styrène), le PLA (acide polylactique), le TPU (polyuréthane thermoplastique) et le PET (polyéthylène), et leurs mélanges.

Le composite à partir duquel le corps de réservoir 14 est réalisé comprend par exemple un renfort réalisé en : des fibres choisies dans le groupe constitué par les fibres de carbone, les fibres Kevlar, les fibres de verre, les fibres de céramique, les fibres de matériau polymère, par exemple thermoplastique, notamment les fibres d'aramide ou de polyester, les fibres d'origine végétale, notamment les fibres de lin, les fibres métalliques, les fibres étant de préférence des fibres de carbone, ou un mélange de telles fibres.

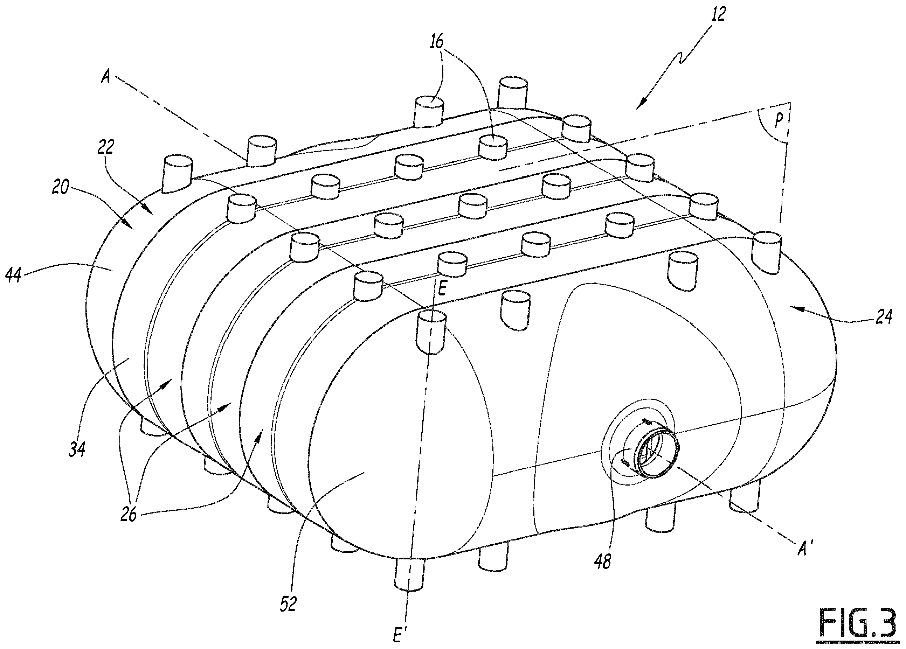

Comme visible sur la figure 2, chaque colonne de réservoir 16 s'étend dans le volume de corps 17 et connecte par exemple des portions de la face interne 18 du corps de réservoir 14 opposées l'une à l'autre relativement au volume de corps 17. Sur les figures 1 et 3, les colonnes 16 sont représentées lors de leur installation et ne sont alors pas encore solidarisées au corps de réservoir 14, le corps de réservoir 14 n'étant en particulier pas formé.

Chaque colonne de réservoir 16 est par exemple soudée au corps de réservoir 14 en chacune des extrémités de la colonne 16 et/ou réalisée de sorte à former un seul bloc avec le corps de réservoir 14.

Chaque colonne de réservoir 16 est par exemple réalisé en composite. Le composite à partir duquel chaque colonne de réservoir 16 est réalisée comprend par exemple une résine telle : une résine époxy, ou une résine réalisée à partir d'au moins un polymère thermoplastique choisi dans le groupe constitué par les polyoléfines, notamment le polypropylène, les polyamides, notamment les polyamides aliphatiques, tels que le polycaprolactame PA 6, le polyhexaméthylène adipamide PA 6.6, les polycarbonates, les PAEK (Polyaryléthercétone) dont font partie le PEEK (polyétheréthercétone) et le PEKK (polyéthercétonecétone), les matières sur base acrylique type PMMA (notamment la résine connue sous le nom d'ELIUM), les PEI (Polyétherimide également connu sous le nom d'ULTEM), le PPS (Polysulfure de phénylène), l'ABS (acrylonitrile butadiène styrène), le PLA (acide polylactique), le TPU (polyuréthane thermoplastique) et le PET (polyéthylène), et leurs mélanges. Le composite à partir duquel le corps de réservoir 14 est réalisé comprend par exemple un renfort réalisé en : des fibre choisies dans le groupe constitué par les fibres de carbone, les fibres Kevlar, les fibres de verre, les fibres de céramique, les fibres de matériau polymère, par exemple thermoplastique, notamment les fibres d'aramide ou de polyester, les fibres d'origine végétale, notamment les fibres de lin, les fibres métalliques, les fibres étant de préférence des fibres de carbone, ou un mélange de telles fibres. Le composite à partir duquel chaque colonne de réservoir 16 est réalisée comprend par exemple un renfort réalisé en : des fibre choisies dans le groupe constitué par les fibres de carbone, les fibres Kevlar, les fibres de verre, les fibres de céramique, les fibres de matériau polymère, par exemple thermoplastique, notamment les fibres d'aramide ou de polyester, les fibres d'origine végétale, notamment les fibres de lin, les fibres métalliques, les fibres étant de préférence des fibres de carbone, ou un mélange de telles fibres.

Dans un mode de réalisation particulier, le matériau des colonnes de réservoir 16 est le même que le matériau du corps de réservoir 14.

Dans une variante non représentée, les colonne 16 sont par exemple creuses.

Comme vu plus haut, l'enveloppe 12 est par exemple disposée dans le volume de corps 17.

L'enveloppe 12 est configurée pour assurer l'étanchéité du réservoir 10 au gaz pressurisé tandis que le corps de réservoir 14 est configuré pour assurer la résistance à la pression du gaz pressurisé.

Comme illustré sur la figure 3, l'enveloppe 12 comprend une première partie 22, une deuxième partie 24 et au moins une partie intermédiaire 26.

La première partie 22, la deuxième partie 24 et l'au moins une partie intermédiaire 26 sont par exemple réalisées en un matériau thermoplastique choisi dans la liste consistant en ABS (Acrylonitrile butadiene styrène), PA (polyamide), PE (polyethylene), PC (polycarbonate), PP (polypropène), PMMA (poly méthacrylate de méthyle acrylique), PS (Polystyrène Expansé), PBT (Polytéréphtalate de butylène). Le matériau de la première partie 22, de la deuxième partie 24 et de l'au moins une partie intermédiaire 26 est par exemple plus particulièrement choisi dans la liste consistant en : PA6 (Polycaprolactame), PA11 (polyundécanamide) ou PA12 (Nylon 12).

Comme cela sera décrit plus en détails par la suite, le matériau thermoplastique choisi pour réaliser la première partie 22, la deuxième partie 24 ou l'au moins une partie intermédiaire 26 peut comprendre un additif.

L'enveloppe 12 comprend par exemple une pluralité, et par exemple entre une et cinq parties intermédiaires. Dans le mode de réalisation de la figure 3, l'enveloppe comprend trois parties intermédiaires 26.

Comme illustré sur la figure 3, l'au moins une partie intermédiaire 26 est disposée entre la première 22 et la deuxième 24 parties selon une direction d'assemblage A-A'. La ou les partie(s) intermédiaire(s) 26 sont solidarisées aux première 24 et deuxième 26 parties. Comme illustré sur la figure 1, lorsque l'enveloppe 12 comprend plusieurs parties intermédiaires 26, les parties intermédiaires 26 sont adjacentes selon la direction d'assemblage A-A'. L'une des parties intermédiaires 26 est par exemple solidarisée à la première partie 22, une autre des parties intermédiaires 26 est solidarisée à la deuxième partie 24, les autres éventuelles parties intermédiaires 26 étant chacune solidarisées à des parties intermédiaires 26 leur étant adjacentes.

La première partie 22, la deuxième partie 24 et l'au moins une partie intermédiaire 26 délimitent ensemble un volume intérieur 28. Le volume intérieur 28 ainsi délimité est configuré pour être occupé par le gaz pressurisé.

La première partie 22, la deuxième partie 24 et l'au moins une partie intermédiaire 26 sont par exemple, en alternance selon la direction d'assemblage A-A', réalisées en un matériau configuré pour être transparent à un rayonnement laser et en un matériau configuré pour absorber un rayonnement laser. Ainsi, l'une de deux parties 22, 24, 26 de l'enveloppe 10 adjacentes est réalisée en un matériau configuré pour être transparent à un rayonnement laser, l'autre des deux parties 22, 24, 26 de l'enveloppe 10 adjacentes étant réalisée en un matériau configuré pour absorber un rayonnement laser.

Dans l'exemple de la figure 3, la première partie 22 et la deuxième partie 24 sont réalisées en un matériau configuré pour absorber un rayonnement laser. Les parties intermédiaires 26 solidarisées à ces première 22 et deuxième parties 24 sont alors réalisées en un matériau configuré pour être transparent à un rayonnement laser, la partie intermédiaire 26 solidarisée auxdites parties intermédiaires 26 étant alors réalisée en un matériau configuré pour absorber un rayonnement laser.

La première partie 22, l'au moins une partie intermédiaire 26 et la deuxième partie 24, sont alors par exemple solidarisées entre elles selon la direction d'assemblage A-A' par soudage laser 14.

Comme illustré en figure 2, une partie 22, 24, 26, réalisée en matériau configuré pour être transparent à un rayonnement laser comprend une portion de recouvrement 30 recouvrant une portion recouverte 32 de la partie 22, 24, 26 lui étant adjacente et étant réalisée en matériau configuré pour absorber un rayonnement laser. La première partie 22, l'au moins une partie intermédiaire 26 et la deuxième partie 24 sont alors solidarisées par soudage laser entre la portion de recouvrement 30 et la portion recouverte 32 de parties 22, 24, 26 adjacentes.

Le matériau configuré pour être transparent à un rayonnement laser est par exemple réalisé dans l'un des matériaux thermoplastiques présentés plus haut, ledit matériau thermoplastique étant dépourvu d'additif d'absorption de lumière.

Le matériau configuré pour absorber un rayonnement laser est par exemple réalisé dans l'un des matériaux thermoplastiques présentés plus haut, ledit matériau thermoplastique comprenant un additif d'absorption de lumière, tel par exemple du carbone.

Dans un mode de réalisation particulier, le matériau configuré pour être transparent à un rayonnement laser et le matériau configuré pour absorber un rayonnement laser sont réalisés à l'aide d'un même matériau thermoplastique, la différence entre ces matériaux étant que le matériau configuré pour absorber un rayonnement laser est traité à l'aide d'un additif d'absorption de lumière tandis que le matériau configuré pour être transparent à un rayonnement laser n'est pas traité à l'aide d'un tel additif.

Comme visible sur la figure 1, l'au moins une partie intermédiaire 26 comprend une coque intermédiaire 34 et au moins un pilier 36 allongé selon une direction d'élongation E-E'. L'au moins une partie intermédiaire 26 comprend par exemple entre deux et huit piliers.

Dans le mode de réalisation illustré dans les figures 1 à 3, la partie intermédiaire 26 comprend une pluralité de piliers 36 et en particulier cinq piliers. La pluralité de piliers 36 est par exemple alignée selon une direction perpendiculaire à la direction d'assemblage A-A' et à la direction d'élongation E-E' desdits piliers.

La coque intermédiaire 34 est par exemple de profil constant selon la direction d'assemblage A-A'. Dans l'exemple de la figure 1, la coque intermédiaire à un profil de forme oblongue selon un plan normal à la direction d'assemblage A-A', ce profil étant constant selon la direction d'assemblage A-A'.

L'au moins un pilier allongé connecte deux portions opposées de la coque intermédiaire 34 et traverse le volume intérieur 28 perpendiculairement à la direction d'assemblage A-A'. Le pilier 36 et la coque intermédiaire 34 sont en particulier venus de matière.

Le volume intérieur 28 s'étend alors à l'intérieur de la coque intermédiaire 34, autour du ou de chaque pilier 36.

Comme visible sur la figure 1, l'au moins un pilier allongé 36 s'étend par exemple selon un plan P médian de la partie intermédiaire 26, le plan P étant orthogonal à la direction d'assemblage A-A'.

Comme visible sur la figure 2, le pilier 36 est creux. Le pilier 36 comprend en particulier une paroi de pilier 38, connectée à la coque intermédiaire 34, et délimitant une cavité de pilier 40. Une épaisseur de la paroi de pilier 38 est par exemple sensiblement égale à une épaisseur de la coque intermédiaire 34.

Le pilier 36 et la coque intermédiaire 34 délimitent, pour chaque pilier 36, deux ouvertures 42 de la cavité dudit pilier 40, de sorte que la cavité de pilier 40 débouche de part et d'autre de la partie intermédiaire 26.

Comme illustré sur la figure 2, une colonne de réservoir 16 est logée dans la cavité 40 de chaque pilier 36, la colonne de réservoir 16 débordant de la cavité 40 de part et d'autre de la partie intermédiaire 26, au travers des deux ouvertures 42 (les colonnes 16 sont illustrées lors de leur installation sur les figures 1 et 3).

La première partie 22 comprend une première coque 44. La première partie 22 comprend en outre par exemple au moins une première nervure de renfort 46.

La première partie 22 et la partie intermédiaire 26 adjacente à la première partie 22 sont par exemple solidarisées l'une à l'autre par une solidarisation de la première coque 44 à la coque intermédiaire 34 de la partie intermédiaire 26 adjacente.

Comme illustré sur la figure 1, un port 48 du réservoir 10 est par exemple logé dans la première partie 22 pour permettre l'accès au volume intérieur 28, par exemple pour le remplissage et/ou le vidage du volume intérieur 28 en gaz pressurisé.

Chaque première nervure de renfort 46 est solidaire de la première coque 44. En particulier, chaque première nervure de renfort 46 et la première coque 44 sont par exemple venues de matière.

Comme illustré sur la figure 2, la nervure de renfort 46 comprend une lumière 50 s'étendant parallèlement à la direction d'élongation E-E'. En d'autre termes, la lumière 50 s'étend parallèlement à l'au moins un pilier de l'au moins une partie intermédiaire 26. La lumière 50 débouche par exemple de part et d'autre de la première partie 22.

Une colonne de réservoir 16 est par exemple logée dans la lumière 50 de chaque première nervure de renfort 46 et déborde de part et d'autre de la lumière 50 en étant solidarisée au corps de réservoir 14.

La deuxième partie 24 comprend une deuxième coque 52. La deuxième partie 24 comprend en outre par exemple au moins une deuxième nervure de renfort 54.

La deuxième partie 24 et la partie intermédiaire 26 adjacente à la deuxième partie 24 sont par exemple solidarisées l'une à l'autre par une solidarisation de la deuxième coque 52 à la coque intermédiaire 34 de la partie intermédiaire 26 adjacente.

Comme illustré sur la figure 2, un port 48 du réservoir 10 est par exemple logé dans la deuxième partie 24 pour permettre l'accès au volume intérieur 28, par exemple pour le remplissage et/ou le vidage du volume intérieur 28 en gaz pressurisé.

Chaque deuxième nervure de renfort 54 est solidaire de la deuxième coque 52. En particulier, chaque deuxième nervure de renfort 54 et la deuxième coque 52 sont par exemple venues de matière.

Comme illustré sur la figure 2, la deuxième nervure de renfort 54 comprend une lumière 56 s'étendant parallèlement à la direction d'élongation E-E'. En d'autre termes, la lumière 56 s'étend parallèlement à l'au moins un pilier de l'au moins une partie intermédiaire 26. La lumière 56 débouche par exemple de part et d'autre de la deuxième partie 24.

Une colonne de réservoir 16 est par exemple logée dans la lumière 54 de chaque deuxième nervure de renfort 54 et déborde de part et d'autre de la lumière 50 en étant solidarisée au corps de réservoir 14.

Un deuxième mode de réalisation d'une enveloppe 12 de contention de gaz pressurisé va maintenant être présenté. Selon ce deuxième mode de réalisation, l'enveloppe 12 diffère du mode de réalisation précédemment présenté par ce qui suit. Les éléments analogues portent les mêmes références.

Dans ce deuxième mode de réalisation, la première partie 22, l'au moins une partie intermédiaire 26 et la deuxième partie 24, ne sont pas assemblées par soudage laser mais sont assemblées selon la direction d'assemblage A-A' par soudage bord à bord.

A cet effet, les parties 22, 24, 26 ne sont pas nécessairement en alternance formés en un matériau configuré pour être transparent à un rayonnement laser et en un matériau configuré pour absorber le rayonnement laser. Les parties 22, 24, 26, ne comprennent alors pas non plus nécessairement de portion de recouvrement 30 et/ou de portion recouverte 32.

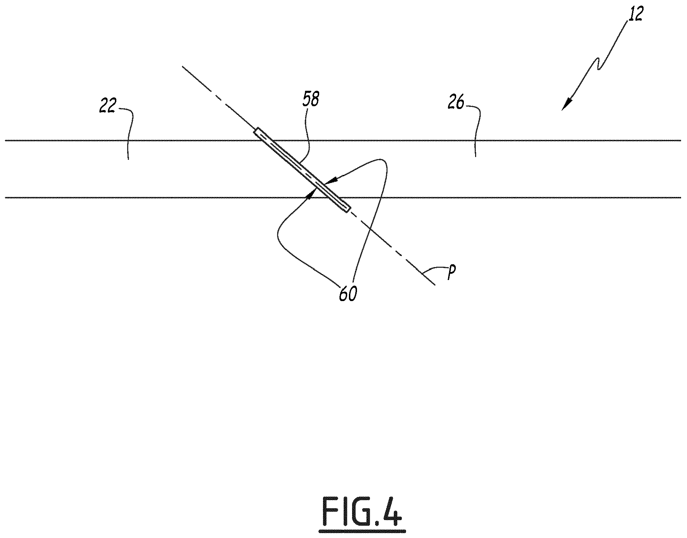

Selon ce mode de réalisation, et comme illustré en figure 4, une feuille résistive 58 est disposée entre des bords adjacents 60 soudés de la première partie 22, de l'au moins une partie intermédiaire 26 ou de la deuxième partie 24. Le soudage de deux parties 22, 24, 26 est alors réalisé par l'intermédiaire de la feuille résistive et résulte notamment d'une fusion locale des bords adjacents 60 de part et d'autre de la feuille résistive 58. La figure 4 illustre le soudage entre des bords adjacents 60 de la première partie 22 et de la partie intermédiaire 26.

La feuille résistive 58 est configuré pour être chauffée par effet Joule et est par exemple réalisée en carbone.

Les bords adjacentes 60 délimitent entre eux un plan de soudage bord à bord S. Comme illustré dans sur la figure 4, le plan de soudage bord à bord S est par exemple oblique relativement à la direction d'assemblage, c'est à dire que le plan de soudage bord à bord S n'est par orthogonal à la direction d'assemblage A-A'. Le plan de soudage forme par exemple un angle compris entre 0° et 80° par rapport à la direction d'assemblage A-A' et notamment entre 30° et 60°.

Un troisième mode de réalisation d'une enveloppe 12 de contention de gaz pressurisé va maintenant être présenté. Selon ce troisième mode de réalisation, l'enveloppe 12 diffère des modes de réalisation précédemment présenté par ce qui suit. Les éléments analogues portent les mêmes références.

Dans ce troisième mode de réalisation, la première partie 22, l'au moins une partie intermédiaire 26 et la deuxième partie 24, ne sont ni assemblées par soudage laser, ni par soudage bord à bord, mais sont assemblées selon la direction d'assemblage A-A' par soudage à gaz chaud.

A cet effet, les parties 22, 24, 26 ne sont pas nécessairement en alternance formés en un matériau configuré pour être transparent à un rayonnement laser et en un matériau configuré pour absorber le rayonnement laser. Aucune feuille résistive n'est en outre disposée entre des bords adjacents des parties 22, 24, 26. Deux parties adjacentes peuvent toutefois comprendre une portion de recouvrement 30 respectivement une portion recouverte 32, tout comme dans le premier mode de réalisation. Lesdites parties adjacentes sont par exemples solidarisées l'une à l'autre à l'aide d'une soudure des portions de recouvrement 30 et recouverte 32 résultant d'un chauffage à l'aide d'un gaz chaud, tel de l'air chaud.

Un procédé de fabrication d'une enveloppe 12 de contention de gaz pressurisé telle que décrite plus haut va maintenant être présenté.

Lors d'une première étape, une première partie 22, une deuxième partie 24 et au moins une partie intermédiaire 26 de l'enveloppe 12 est fournie.

Lors d'une seconde étape, la ou des partie(s) intermédiaire(s) 26 sont solidarisées aux première 22 et deuxième 24 parties, la ou les partie(s) intermédiaire(s) 26 étant disposées entre la première partie 22 et la deuxième partie 24 selon la direction d'assemblage A-A'. Lorsque l'enveloppe 12 comprend une pluralité de parties intermédiaires 26, les parties intermédiaires 26 adjacentes sont en outre solidarisées entre elles.

Selon le premier mode de réalisation, présenté plus haut, les première partie 22, deuxième partie 24 et partie intermédiaire 26 sont solidarisées entre elles par soudage laser. Un faisceau laser est pointé sur la portion recouverte 30 au travers de la portion de recouvrement 32. Ceci génère un chauffage desdites portions 30, 32, aboutissant à une soudure des parties comprenant lesdites portions 30, 32.

Selon le deuxième mode de réalisation, les première partie 22, deuxième partie 24 et partie intermédiaire 26 sont solidarisées entre elles par soudage bord à bord. Les bords adjacents 60 de deux parties sont apposées de part et d'autres de la feuille résistive 58. Un courant est alors généré au travers de la feuille résistive 58 pour son chauffage par effet Joule. Les bords adjacents 60 sont ainsi chauffés, résultant en une soudure des bords adjacents 60 à la feuille résistive 58.

Selon le troisième mode de réalisation, présenté plus haut, les première partie 22, deuxième partie 24 et partie intermédiaire 26 sont solidarisées entre elles par soudage à gaz chaud.

Le chauffage de parties adjacentes pour leur fusion locale et pour la soudure qui en résulte est alors réalisé par l'intermédiaire d'un jet de gaz chaud.

On comprendra que les différents modes de soudure présentés dans les trois modes de réalisation plus haut peuvent être combinés et sont par exemple interchangeables. Par exemple, la premier partie 22 est solidarisée à l'une des parties intermédiaires 26 par soudage laser, la deuxième partie 24 est solidarisée à une autre des parties intermédiaires 26 par soudage laser, les parties intermédiaires 26 étant soudées entre elles par soudage bord à bord.

## Revendications

1. Enveloppe de contention de gaz pressurisé (12), comprenant :
- une première partie (22), comprenant une première coque (44),
- une deuxième partie (24), comprenant une deuxième coque (52),
- au moins une partie intermédiaire (26), disposée entre la première (22) et la deuxième partie (24), selon une direction d'assemblage (A-A'), la ou les partie(s) intermédiaire(s) (26) étant solidarisées aux première (22) et deuxième parties (24),
la première partie (22), la deuxième partie (24) et l'au moins une partie intermédiaire (26) délimitant ensemble un volume intérieur (28),
la ou au moins l'une des partie(s) intermédiaire(s) (26) comprenant :
- une coque intermédiaire (34), et
- au moins un pilier (36) allongé selon une direction d'élongation (E-E'), connectant deux portions opposées de la coque intermédiaire (34) et traversant le volume intérieur (28) perpendiculairement à la direction d'assemblage (A-A'), le pilier (36) et la coque intermédiaire (34) étant venus de matière,
**caractérisée en ce que** l'enveloppe (12) comprend une pluralité de parties intermédiaires (26), adjacentes selon la direction d'assemblage (A-A').

2. Enveloppe (12) selon la revendication 1, dans laquelle l'au moins une partie intermédiaire (12) comprend une pluralité de piliers (36), la pluralité de piliers (36) étant alignée selon une direction perpendiculaire à la direction d'assemblage (A-A') et à la direction d'élongation (E-E') desdits piliers (36).

3. Enveloppe (12) selon la revendication 1 ou 2, dans laquelle l'au moins un pilier (36) est creux, le pilier (36) comprenant une paroi de pilier (38), connectée à la coque intermédiaire (34) et délimitant une cavité de pilier (40), le pilier (36) et la coque intermédiaire (34) délimitant deux ouvertures (42) de sorte que la cavité de pilier (40) débouche de part et d'autre de la partie intermédiaire (26).

4. Enveloppe (12) selon l'une quelconque des revendications précédentes, dans laquelle :
- la première partie (22) comprend au moins une première nervure de renfort (46) solidaire de la première coque (44), ladite première nervure de renfort (46) comprenant une lumière (50) s'étendant parallèlement à la direction d'élongation (E-E') et débouchant de part et d'autre de la première partie (22), et/ou
- la deuxième partie (24) comprend au moins une deuxième nervure de renfort (54) solidaire de la deuxième coque (52), ladite deuxième nervure de renfort (54) comprenant une lumière (56) s'étendant parallèlement à la direction d'élongation (E-E') et débouchant de part et d'autre de la deuxième partie (24).

5. Enveloppe (12) selon l'une quelconque des revendications précédentes, dans laquelle la première partie (22), l'au moins une partie intermédiaire (26) et la deuxième partie (24), sont en alternance selon la direction d'assemblage (A-A'), formés en un matériau configuré pour être transparent à un rayonnement laser et en un matériau configuré pour absorber le rayonnement laser,
la première partie (22), l'au moins une partie intermédiaire (26) et la deuxième partie (24), étant solidarisées entre elles selon la direction d'assemblage (A-A') par soudage laser.

6. Enveloppe (12) selon l'une quelconque des revendications 1 à 4, dans laquelle la première partie (22), l'au moins une partie intermédiaire (26) et la deuxième partie (24), sont solidarisées entre elles selon la direction d'assemblage (A-A') par soudage bord à bord, une feuille résistive (58) étant disposée entre des bords adjacents (60) soudés de la première partie (22), de l'au moins une partie intermédiaire (26) ou de la deuxième partie (24).

7. Enveloppe (12) selon la revendication 6, dans laquelle les bords adjacents (60) soudés délimitent entre eux un plan de soudage (S) bord à bord oblique, s'étendant obliquement relativement à la direction d'assemblage (A-A').

8. Réservoir de gaz pressurisé (10) comprenant une enveloppe de gaz pressurisé (12) selon l'une quelconque des revendications 1 à 7, et un corps de réservoir (14) disposé autour de l'enveloppe (12), une face interne (18) du corps de réservoir (14) étant apposée à une face externe (20) de l'enveloppe (12).

9. Procédé de fabrication d'une enveloppe de contention d'un gaz pressurisé (12), comprenant les étapes suivantes :
- fourniture d'une première partie (22), d'une deuxième partie (24) et d'au moins une partie intermédiaire (26) de l'enveloppe (12) ;
- solidarisation de la ou des partie(s) intermédiaire(s) (26) aux première (22) et deuxième (24) parties, la ou les partie(s) intermédiaire(s) (26) étant disposée(s) entre la première partie (22) et la deuxième partie (24) selon la direction d'assemblage (A-A'),
**caractérisé en ce que** l'enveloppe (12) comprend une pluralité de parties intermédiaires (26), adjacentes selon la direction d'assemblage (A-A').
